(19) Europäisches Patentamt
European Patent Office
Office européen des brevets

(11) Veröffentlichungsnummer: **0 065 768**
**A1**

(12) # EUROPÄISCHE PATENTANMELDUNG

(21) Anmeldenummer: **82104452.6**

(22) Anmeldetag: **21.05.82**

(51) Int. Cl.³: **C 09 J 3/00**
//C08L35/04, C07C121/413

(30) Priorität: **27.05.81 DE 3121119**

(43) Veröffentlichungstag der Anmeldung:
**01.12.82 Patentblatt 82/48**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Gruber, Werner, Dr.**
**Franz-Kremer-Strasse 7**
**D-4052 Korschenbroich(DE)**

(72) Erfinder: **Bruhn, Hans-Athanas, Dr.**
**Am Kahlen Berg 9**
**D-3008 Garbsen 6(DE)**

(54) **Klebstoffe auf Basis von Cyanacrylsäureestern.**

(57) Klebstoffe auf Basis von Cyanacrylsäureestern mit verkürzter Abbindezeit enthalten zusätzlich 0,005 bis 3,0 Gewichtsprozent, bezogen auf Cyanacrylsäureester, an Verbindungen der allgemeinen Formel

$$R_1 - \overset{\overset{\displaystyle O}{\|}}{C} - O - (Alk.\ O)_x - \overset{\overset{\displaystyle O}{\|}}{C} - R_2$$

in der x eine Zahl von 5 bis 80 darstellt und Alk. einen Alkylrest mit 2, 3 oder 4 Kohlenstoffatomen und $R_1$ und $R_2$ einen gegebenenfalls Ether-, Nitril-, Nitrogruppen oder Halogen oder Doppelbindungen oder Dreifachbindungen enthaltenden Alkyl- und/oder Aryl und/oder Cycloalkylrest mit 1 bis 12 Kohlenstoffatomen darstellt.

EP 0 065 768 A1

Croydon Printing Company Ltd.

0065768

HENKEL KGaA
ZR-FE/Patente

Henkelstraße 67
4000 Düsseldorf, den 11. Februar 1982

Dr.SchOe/Ge

Patentanmeldung
D 6393 EP

"Klebstoffe auf Basis von Cyanacrylsäureestern"

Die vorliegende Erfindung betrifft Klebstoffe auf Basis von Cyanacrylsäureestern mit verkürzter Abbindezeit und deren Verwendung an porösen Oberflächen.

Es ist bekannt, daß Klebstoffe auf Basis von Cyanacrylsäureestern sich durch kurze Abbindezeiten beim Verbinden beziehungsweise Verkleben der verschiedensten Materialien auszeichnen. Diese Aushärtung erfolgt im allgemeinen aufgrund einer anionisch ausgelösten Polymerisation. Während sich Metalloberflächen, Glas und dergleichen sehr schnell miteinander verkleben lassen, treten Schwierigkeiten beim Verkleben von porösen Oberflächen auf. Insbesondere sind solche Schwierigkeiten zu beobachten bei Werkstoffen wie Holz, Papier, Leder und dergleichen.

Wird $\alpha$-Cyanacrylsäureester zum Verkleben von Materialien verwendet, deren Oberflächen sauer reagieren, wird die anionische Polymerisation inhibiert und die Abbindezeit wird verlängert. Die Adhäsionsfestigkeit ist auch nicht zufriedenstellend. Holz besitzt im allgemeinen einen Feuchtigkeitsgehalt von etwa 10 Gewichtsprozent bei normalen Bedingungen (22° C bei einer relativen Feuchtigkeit von 40 %). Trotz dieses hohen Wasser-

...

gehalts im Holzgewebe und auf der Oberfläche der Holzmaterialien ist eine Abbindezeit von mehr als 10 bis 20 Minuten erforderlich, um Holz mit den bekannten Klebstoffen der Cyanacrylester zu verkleben. Da die Cyanacrylester in das Holzgewebe während dieser Zeit eindringen, ist es schwierig, Holz mit diesen Klebstoffen zu verkleben. Dementsprechend nimmt hier die Wirkung der Klebstoffe als Schnellklebstoffe drastisch ab.

Es ist bekannt, daß man diese Schwierigkeiten zumindest teilweise durch Zusätze von makrocyclischen Polyethern, auch Kronenethern genannt, weitgehend beheben kann. Beim Zusatz dieser Verbindungen oder auch bestimmter Tenside auf Basis von Polyethylenglykolen wird die Aushärtezeit der Cyanacrylsäureester erheblich verkürzt.

Jedoch kann der Zusatz der bekannten Verbindungen auch zu einer unerwünschten Entstabilisierung der Cyanacrylsäureester führen, so daß sie nur noch eine begrenzte Lagerzeit haben, die natürlich für den Gebrauch unerwünscht ist.

Aufgabe der vorliegenden Erfindung war es daher, solche Zusätze zu finden, die einerseits die Aushärtegeschwindigkeit der Cyanacrylsäureester erheblich verkürzen und die Verklebungen an porösen, insbesondere sauren Oberflächen ermöglichen, andererseits aber nicht zu einer unerwünschten, zu starken Verkürzung der Lagerfähigkeit der Klebstoffe führen.

Erfindungsgemäß wird die Aufgabe dadurch gelöst, daß man Klebstoffen auf Basis von Cyanacrylsäureestern zusätzlich 0,005 bis 3,0 Gewichtsprozent, bezogen auf Cyanacrylsäureester, an bestimmten Verbindungen der allgemeinen Formel

$$R_1 - \overset{O}{\overset{\|}{C}} - O - (Alk.\ O)_x - \overset{O}{\overset{\|}{C}} - R_2$$

...

zusetzt, in der x eine Zahl von 6 bis 80 darstellt und Alk. einen Alkylrest mit 2,3 oder 4 Kohlenstoffatomen und $R_1$ und $R_2$ einen gegebenenfalls Ether-, Nitril-, Nitrogruppen oder Halogen oder Doppelbindungen oder Dreifachbindungen enthaltender Alkyl- und/oder Aryl- und/oder Cycloalkylrest mit 1 bis 12 Kohlenstoffatomen darstellt.

Zur Herstellung der erfindungsgemäß zuzusetzenden Verbindungen kann man ausgehen von Polyethylenglykolen, die aus 6 bis 80 Ethylenglykolbausteinen aufgebaut sind. In der Praxis sind Polyethylenglykole eines Molekulargewichts von etwa 200 bis 5 000 erhältlich. Diese können dann in bekannter Weise acyliert werden. Das gleiche gilt für Polypropylenglykole, die im Molekulargewichtsbereich von 400 bis 2 000 handelsübliche Verbindungen sind. Eine bevorzugte Stellung nehmen Polyethylenglykole mit einem Molekulargewicht von etwa 400 bis 1 000 ein. Auch können Polybutylenglykolether eingesetzt werden, wie sie durch Ringöffnungspolymerisation aus Tetrahydrofuran erhältlich sind.

Die beiden OH-Endgruppen können nach üblichen Verfahren acyliert werden. Demnach kann eine Acylierung vorgenommen werden mit beispielsweise dem Propionsäure-, Buttersäure-, Cyanessigsäure-, Chlorameisensäureester, Chloressigester oder den Säurechloriden. Weiterhin kann man mit Acrylsäure- bzw. Methacrylsäurechlorid bzw. Ester umsetzen. Mit dem Methacrylsäure- und Acrylsäurerest werden besonders gute Resultate erzielt. Die Polyalkylenglykole, die mit einem Acrylsäure- bzw. Methacrylsäurerest endverschlossen sind, zeichnen sich durch gute Klebfestigkeit aus. Bevorzugte Zusätze sind also die Di-(meth)acrylester von Polyethylenglykol mit einem Molekulargewicht von 200 bis 1 000 in einer Menge von 0,05 bis 3,0 Gewichtsprozent, bezogen auf Cyanacrylester.

...

Als Basis für die mit den erfindungsgemäßen Zusätzen versehenen Klebstoffe eignet sich in erster Linie ein $\alpha$-Cyanacrylester, wobei der alkoholische Bestandteil eine Alkylgruppe mit 1 bis 12 Kohlenstoffatomen, die mit einem Substituenten, wie einem Halogenatom oder einer Alkoxygruppe, substituiert sein kann, eine geradkettige oder verzweigtkettige Alkenylgruppe mit 2 bis 12 Kohlenstoffatomen, eine Alkinylgruppe mit 2 bis 12 Kohlenstoffatomen, eine Cycloalkylgruppe, einer Aralkylgruppe oder eine Arylgruppe ist. Beispiele für derartige Bestandteile sind: Methyl-, Ethyl-, n-Propyl-, Isopropyl-, n-Butyl-, Isobutyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylreste.

Der entsprechend der vorliegenden Erfindung verwendete $\alpha$-Cyanacrylester kann aus einem einzigen $\alpha$-Cyanacrylester oder einem Gemisch aus zwei oder mehreren $\alpha$-Cyanacrylestern bestehen. Die Eigenschaften der Klebstoffe können günstig beeinflußt werden durch Zusätze wie anionische Polymerisationsinhibitoren und/oder Radikal-Polymerisationsinhibitoren, Verdickungsmittel, Weichmacher, Wärmestabilisatoren sowie Farbstoffe, Pigmente und dergleichen.

Eine geeignete Menge an $\alpha$-Cyanacrylsäureestern liegt etwa bei 80 bis 99,9 Gewichtsprozent, vorzugsweise 90 bis 99,9 Gewichtsprozent, bezogen auf das Gesamtgewicht der Klebstoffzusammensetzung.

An anionischem Polymerisationsinhibitor kann etwa 1 bis 1 000 ppm, bezogen auf das Gesamtgewicht der Klebstoffzusammensetzung verwendet werden, um die Stabilität

...

des Klebstoffs während der Lagerung zu erhöhen. Beispiele dafür sind Schwefeldioxid, aromatische Sulfonsäuren, aliphatische Sulfonsäuren und Phosphorsäuren. Geeignete Inhibitoren für die Radikalpolymerisation sind zum Beispiel Hydrochinon und Hydrochinonmonomethylether. Sie können in einer Menge von etwa 1 bis 5 000 ppm, bezogen auf das Gesamtgewicht der Klebstoffzusammensetzung, zugegeben werden, um gebildete Radikale einzufangen.

Zur Erhöhung der Viskosität kann ein Verdickungsmittel zugegeben werden. Die α-Cyanacrylsäureester besitzen im allgemeinen nur eine Viskosität von mehreren mPa·s. Daher dringt der Klebstoff in poröse Materialien, wie Holz und Leder, oder in Materialien mit rauhen Oberflächen leicht ein. Es ist dann schwierig, eine gute Adhäsion zu erhalten. Als Verdickungsmittel können verschiedene Polymere verwendet werden, wie Poly(methylmethacrylat), Copolymere von Methacrylsäureestern, Acrylkautschuke, Cellulosederivate, Polyvinylacetat und anpolymerisierte α-Cyanacrylsäureester. Die geeignete Menge an Verdickungsmittel beträgt im allgemeinen etwa 20 Gewichtsprozent oder weniger, bezogen auf das Gesamtgewicht des Klebstoffs.

Die Weichmacher, Farbstoffe, Pigmente usw. können in Abhängigkeit von den Verwendungszwecken in Mengen zugegeben werden, die die Stabilität des α-Cyanoacrylesters nicht nachteilig beeinflussen.

Verwendung finden können die mit den erfindungsgemäßen Zusätzen versehenen Cyanacrylsäureester zum Verkleben von porösen Oberflächen mit sich selbst oder mit anderen. Insbesondere können sie eingesetzt werden zum Verkleben von Holz, Papier, Leder oder Textilien. Auch auf Metallen wie Aluminium oder Eisen können hohe Festigkeiten erzielt werden.

...

Verwendung finden können die mit den erfindungsgemäßen Zusätzen versehenen Cyanacrylsäureester zum Verkleben von porösen Oberflächen mit sich selbst oder mit anderen. Insbesondere können sie eingesetzt werden zum Verkleben von Holz, Papier, Leder oder Textilien. Auch auf Metallen wie Aluminium oder Eisen können hohe Festigkeiten erzielt werden.

...

## Beispiele

Folgende Verbindungen wurden geprüft:

| | | | | |
|---|---|---|---|---|
| A | Dimethacrylsäureester | von | Polyethylenglykol | (M 400) |
| B | Dimethacrylsäureester | von | Polyethylenglykol | (M 600) |
| C | Dimethacrylsäureester | von | Polyethylenglykol | (M 1 000) |
| D | Dikohlensäureester | von | Polyethylenglykol | (M 600) |
| E | Dikohlensäureester | von | Polyethylenglykol | (M 1 000) |
| F | Di-α-Cyanacetat | des | Polyethylenglykol | (M 600) |
| G | Di-α-Cyanacetat | des | Polyethylenglykol | (M 1 000) |
| H | Di-α-Cyanacetat | des | Polyethylenglykol | (M 2 000) |
| I | Di-α-Cyanacetat | des | Polypropylenglykol | (M 1 000) |
| J | Dimethacrylsäureester | des | Polypropylenglykol | (M 1 000) |

Der Cyanacrylatklebstoff bestand aus:

| | |
|---|---|
| α-Cyanacrylsäureethylester | 90 % |
| Poly-(methylmethacrylat) | 10 %. |

In der nachfolgenden Tabelle 1 ist in Abhängigkeit von der laufenden Nummer des Beispiels der erfindungsgemäße Zusatz in Gewichtsprozent angegeben und die Zeit bis zur sogenannten Handfestigkeit. Die Handfestigkeit wurde an Buchenholz an Hand überlappender Verklebung und an Hand der Stirnflächenverklebung ermittelt. Es ist die Zeit angegeben, die vergeht, bis die Holzstücke nicht mehr leicht von Hand gegeneinander verschoben werden können.

...

Tabelle 1

Einfluß auf die Abbindezeit (Min.)

| Beispiel | Zusatz | | überlappende Verklebung | Stirnflächenverklebung |
|---|---|---|---|---|
| 1 | A | 0,5 | 30" | 110" |
| 2 | A | 0,1 | 50" | 150" |
| 3 | A | 0,05 | 70" | 180" |
| 4 | B | 1,0 | 25" | 60" |
| 5 | B | 0,5 | 30" | 80" |
| 6 | B | 0,1 | 35" | 100" |
| 7 | C | 1,0 | 20" | 40" |
| 8 | D | 1,0 | 60" | 100" |
| 9 | D | 0,5 | 90" | 150" |
| 10 | E | 1,0 | 50" | 100" |
| 11 | E | 0,5 | 70" | 120" |
| 12 | F | 2,0 | 30" | 50" |
| 13 | F | 0,5 | 40" | 70" |
| 14 | F | 0,1 | 120" | 150" |
| 15 | G | 1,0 | 45" | 75" |
| 16 | G | 0,5 | 90" | 120" |
| 17 | H | 0,5 | 90" | 100" |
| 18 | I | 0,5 | 360" | 400" |
| 19 | J | 0,5 | 45" | 60" |
| 20 | J | 0,1 | 30" | 50" |
| | Vergleich | | 25' | 25' |

...

In der Tabelle 2 sind in Abhängigkeit von der laufenden Nummer des Beispiels die Zugscherfestigkeit (bei überlappender Verklebung) und die Zugfestigkeit (bei der Stirnflächenverklebung) angegeben. Diese wurden an folgenden Prüfkörpern ermittelt:

1. Prüfkörper für Stirnflächenverklebung
   = Zugfestigkeit
   100 x 20 x 25 mm trockenes Buchenholz
   verklebte Fläche 500 mm

2. Prüfkörper für überlappende Verklebung
   = Zugscherfestigkeit
   100 x 25 x 5 mm trockenes Buchenholz
   Überlappung 10 mm
   verklebte Fläche 250 mm

Es wurden jeweils 5 Verklebungen durchgeführt und der Mittelwert angegeben. Die Prüfbedingungen waren: Die Zerreißmaschine arbeitete mit einem Vorschub von 15 mm /Min..
Die Aushärtung erfolgte bei 22° C/40 % relativer Luftfeuchtigkeit (Klimaraum).

...

Tabelle 2

Festigkeiten N/mm$^2$

| Beispiel Nr. | Zugscherfestigkeit 3 h | 24 h | Zugfestigkeit 3 h | 24 h |
|---|---|---|---|---|
| 1 | 14 | 17 | 16 | 18 |
| 2 | 12 | 13 | 15 | 16 |
| 3 | 13 | 15 | 17 | 18 |
| 4 | 13 | 13 | 14 | 18 |
| 5 | 14 | 14 | 15 | 19 |
| 6 | 15 | 15 | 12 | 18 |
| 7 | 14 | 15 | 15 | 19 |
| 8 | 12 | 14 | 13 | 16 |
| 9 | 10 | 15 | 12 | 17 |
| 10 | 13 | 15 | 12 | 18 |
| 11 | 11 | 16 | 13 | 17 |
| 12 | 17 | 18 | 7 | 17 |
| 13 | 15 | 17 | 8 | 15 |
| 14 | 12 | 18 | 10 | 18 |
| 15 | 16 | 18 | 6 | 16 |
| 16 | 16 | 16 | 4 | 12 |
| 17 | 14 | 13 | 10 | 15 |
| 18 | 12 | 14 | 9 | 16 |
| 19 | 12 | 18 | 8 | 14 |
| 20 | 10 | 18 | 6 | 15 |
| Vergleich | 10 | 18 | 0,7 | 4 |

...

## Patentansprüche

1) Klebstoffe auf Basis von Cyanacrylsäureestern mit verkürzter Abbindezeit, gekennzeichnet durch einen zusätzlichen Gehalt von 0,005 bis 3,0 Gewichtsprozent, bezogen auf Cyanacrylsäureester, an Verbindungen der allgemeinen Formel

$$R_1 - \overset{\overset{O}{\|}}{C} - O - (Alk.\ O)_x - \overset{\overset{O}{\|}}{C} - R_2$$

in der x eine Zahl von 5 bis 80 darstellt und Alk. einen Alkylrest mit 2, 3 oder 4 Kohlenstoffatomen und $R_1$ und $R_2$ einen gegebenenfalls Ether-, Nitril-, Nitrogruppen oder Halogen oder Doppelbindungen oder Dreifachbindungen enthaltenden Alkyl- und/oder Aryl- und/oder Cycloalkylrest mit 1 bis 12 Kohlenstoffatomen darstellt.

2) Klebstoff nach Anspruch 1, gekennzeichnet durch einen zusätzlichen Gehalt von 0,05 bis 3,0 Gewichtsprozent eines Di(meth)acrylesters von Polyethylenglykol mit einem Molekulargewicht von 200 bis 1 000.

0065768

Europäisches Patentamt

# EUROPÄISCHER RECHERCHENBERICHT

Nummer der Anmeldung

EP 82104452.6

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | Keine Entgegenhaltungen | | C 09 J 3/00<br>//C 08 L 35/04<br>C 07 C 121/413 |
| | | | RECHERCHIERTE SACHGEBIETE (Int. Cl.3) |
| | | | C 09 J<br>C 08 L |
| | | | KATEGORIE DER GENANNTEN DOKUMENTE<br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 03-08-1982 | KAHOVEC |

EPA form 1503.1 06.78